# EUROPEAN PATENT SPECIFICATION

(11) **EP 1 453 041 B1**
(45) Date of publication and mention of the grant of the patent: **23.09.2009**
(21) Application number: 04004236.8
(22) Date of filing: 25.02.2004
(51) Int. Cl.: G11B 7/0045

(54) **Optical disk recording method and apparatus using alternative strategies of laser beam control**
Aufzeichnungsvorrichtung und -Verfahren für optische Datenträger mittels alternativer Strategien für Laserstrahlsteurung
Dispositif et procédé d' enregistrement de disque optique utilisant de strategie alternatifs pour réglage d' un faisceau laser

(30) Priority: 27.02.2003 JP 2003050551
(43) Date of publication of application: 01.09.2004
(73) Proprietor: YAMAHA CORPORATION, Naka-ku Hamamatsu-shi Shizuoka-ken (JP)
(72) Inventor: Nakajo, Yukihisa 108 City Winds Higashitotsuka, Kanagawa-ken 244-0803 (JP)
(74) Representative: Emde, Eric

(56) References cited:
- EP-A- 1 484 753
- WO-A-20/05029472
- US-A1- 2002 080 702
- US-A1- 2003 058 765
- US-A1- 2003 142 603
- US-A1- 2003 223 331
- US-A1- 2004 213 106
- US-B1- 6 414 932
- US-B1- 6 504 806

## Description

### BACKGROUND OF THE INVENTION

### [TECHNICAL FIELD OF THE INVENTION]

The present invention relates to a recording method for recording information and a recording apparatus that records information on recordable optical disks such as CD-R (CD recordable) disks by applying a recording laser beam modulated by recording signals to an information recording surface, thereby alternately forming pits (marks) and lands according to mark length recording scheme. The present invention enables recording with reduced crosstalk characteristics. The invention can improve the sound quality for music recording, for example.

### [PRIOR ART]

Recordable optical disk standards include CD-WO (CD Write Once). The CD-WO standard provides write-once recording in the CD format using CD-R disks. The CD-WO standard employs recording pits of lengths ranging from 3T to 11T (1T = 1/4.3218 MHz = 231 ns). If we simply apply a laser beam having the pulse width equivalent to a pit length to be formed, the residual heat or the like causes an error in the length of an actually formed pit. A pit length error generates a jitter in the reproduction signal to cause a read error. To solve this problem, the pulse width of the recording signal is corrected by using a correction rule based on (n+K)T for pit length nT to be generated, where T is a time duration equivalent to a unit of pit length, n is a natural number ranging from 3 to 11 used as a multiplier to the pit length unit for generating the pit lengths, and K is a correction amount for the pulse width. This correction amount is constant independently of pit length n when optical disks of the same model are recorded at the same recording rate and at the same linear velocity. Further, the laser is driven for recording by setting the laser power to an optimal value corresponding to the recording signal provided with the corrected pulse width. Such correction or setting rule is referred to as the recording strategy. More specifically, the recording strategy provides correction or setting rules concerning pulse widths, rise and fall timings to start and stop irradiation, and recording powers for pulse waveforms of recording laser drive signals in order to generate optimal pit and land lengths. The recording strategy uses formula (n+K)T as a basic strategy concerning the timing axis of pulse waveforms such as pulse widths, and irradiation start and stop timings. Depending on needs, there is separately provided a fine adjustment amount to be added according to each combination of pit and land lengths. When the fine adjustment amount is added according to a combination of pit and land lengths, the recording strategy is defined as (n+K)T + a(nT) - β(nT), where α(nT) is the fine adjustment amount with respect to pit length nT, and β(mT) is the fine adjustment amount with respect to land length mT (m = 3, 4, ..., 11). Concerning the recording power of the laser beam, the recording strategy defines an asymmetry value of the reproduction signal. The asymmetry value is a parameter value concerning the reproduction waveform asymmetry and indicates how much the eye center of an eye pattern deviates from an amplitude center on the eye pattern for RF reproduction signals.

The recording strategy is defined for each model and recording rate of CD-R disks and is stored in a memory of the CD-R disk recording and reproducing apparatus (CD-R drive). When a CD-R disk is mounted on the drive, the drive determines a disk model according to the lead-in start time and the like in the ATIP signal recorded as wobbles in the lead-in area. The drive reads the corresponding recording strategy from the memory in accordance with a combination of the determined disk model and the recording rate specified by a user. The drive then uses the correction rule concerning the timing axis of the pulse waveform defined in the read recording strategy and performs a test record on the CD-R disk's test area by sequentially changing the recording power. After the test recording, the drive reproduces the recorded data from the test area to find an optimal recording power that can provide the asymmetry value defined in the recording strategy. This test recording completes the preparation before actual recording. During the actual recording, the recording power is initialized to the determined optimal value in response to a user's operation. The actual recording is performed by correcting recording signals through the use of the correction rule defined in the read recording strategy concerning the timing axis of pulse waveforms. For example, the following patent document 1 already discloses the technology concerning the recording strategy.
Patent document 1 is Japanese Patent Unexamined Publication No. 1993-314480.

The CD-R disks have been mainly used to record computer data. Recently, however, there is an increasing demand for recording music (audio data) on the CD-R disks. On the other hand, some audio amateurs criticize that the sound quality is degraded on a 80-minute CD-R disk (hereafter referred to as an 80-minute disk) having the data capacity of 700 MB as far as the conventional recording strategy is used.

### SUMMARY OF THE INVENTION

The present invention has been made in consideration of the foregoing. It is therefore an object of the present invention to provide an optical disk recording method and apparatus capable of recording audio data with reduced crosstalk characteristics, thereby improving the sound quality of music recording, for example.
In accordance with the present invention, an optical disk recording method is provided as set forth in claim 1. Further, an optical disk recording apparatus is provided as set forth in claim 12. Preferred embodiments of the present invention may be gathered from the dependent claims.

### BRIEF DESCRIPTION OF THE INVENTION

FIG. 1 shows an embodiment of the present invention and provides a block diagram for recording under control of a system controller in FIG. 7.
FIG. 2 shows differences between laser drive signal waveforms and generated pit shapes when the same recording signal is recorded on the same CD-R disk at the same recording rate and the same linear velocity by changing value K in basic strategy (n+K)T.
FIG. 3 is a characteristics diagram showing changes of pit jitters against changes of asymmetry values when the same recording signal is recorded on the same CD-R disk at the same recording rate and the same linear velocity by changing value K in basic strategy (n+K)T.
FIG. 4 is a characteristics diagram showing changes of land jitters against changes of asymmetry values when the same recording signal is recorded on the same CD-R disk at the same recording rate and the same linear velocity by changing value K in basic strategy (n+K)T.
FIG. 5 is a characteristics diagram showing changes of C1 errors against changes of asymmetry values when the same recording signal is recorded on the same CD-R disk at the same recording rate and the same linear velocity by changing value K in basic strategy (n+K)T.
FIG. 6 is a characteristics diagram showing changes of crosstalk values against changes of asymmetry values when the same recording signal is recorded on the same CD-R disk at the same recording rate and the same linear velocity by changing value K in basic strategy (n+K)T.
FIG. 7 is a block diagram showing a system configuration of an optical disk recording and reproducing apparatus (CD-R disk recording and reproducing apparatus) according to the present invention.
FIG. 8 shows the range of correction amount K to improve C1 error characteristics and jitter characteristics of reproduction signals for recording on optical disks of the same model number by changing recording rates and keeping an optimal recording power, where the range is shown separately in normal recording (jitter-conscious recording or computer data recording) mode according to a conventional recording strategy and in crosstalk-reduction (music recording) mode specific to the present invention.
FIG. 9 is a flowchart showing an example of recording strategy setting control according to the control block configuration in FIG. 1.

### DETAILED DESCRIPTION OF THE INVENTION

First, the basic concept of the invention is described in taking 80-minute recording CD-R disk and 74-minute recording CD-R disk as an example. The 80-minute disk having the data capacity of 700 MB is examined and proves rather degraded sound quality because its track pitch is 1.5 µm and that is narrower than 1.6 µm for that of a 74-minute recording CD-R disk (hereafter referred to as a 74-minute disk) having the data capacity of 650 MB. The narrow track pitch is considered to increase a crosstalk from an adjacent track during reproduction. That is to say, a large crosstalk from the adjacent track increases a servo load and degrades the sound quality due to power variations.

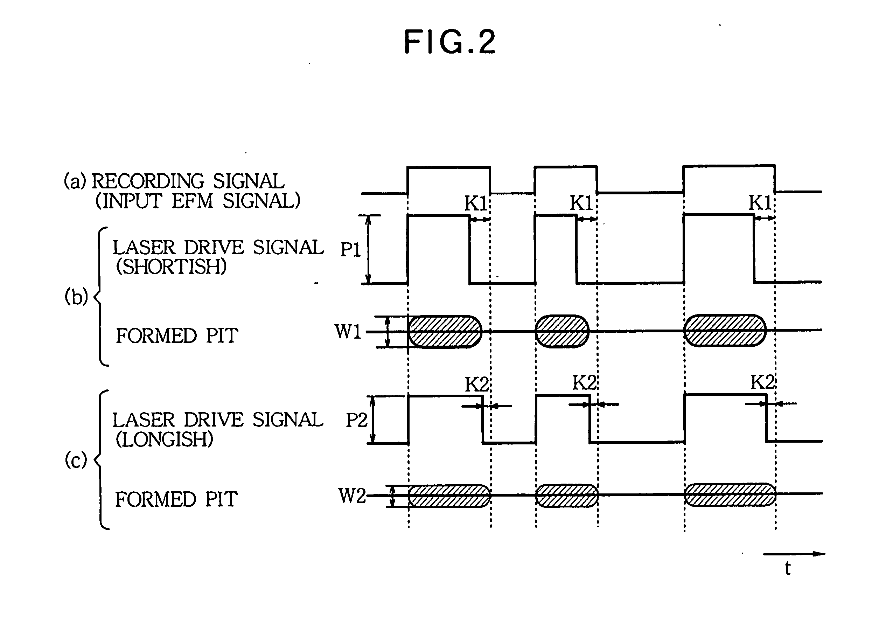

With reference to FIG. 2, the following describes crosstalks and jitters in reproduction signals when the same recording signal is recorded on the same CD-R disk at the same recording rate and the same linear velocity by changing value K in the basic strategy (n+K)T. FIG. 2(a) shows a recording signal before correction. FIGS. 2(b) and 2(c) show laser drive signals with the recording power specified so as to correct the pulse width of the recording signal using the recording strategy (n+K)T and to obtain a specified asymmetry value from the recording by using the corrected pulse width. FIG. 2(b) sets value K to a small value K1 (with the negative sign and a large absolute value) to shorten the pulse width. In this case, the recording power is set to a large value P1 so as to form a specified pit length by promoting the pit formation due to the residual heat. FIG. 2(c) sets value K to a high value K2 (with the negative sign and a small absolute value) to lengthen the pulse width. In this case, the recording power is set to a small value P2 so as to form a specified pit length by suppressing the pit formation due to the residual heat. The signals (b) and (c) are recorded so as to produce the same pit signal length. Since the signal (b) uses a higher recording power, the residual heat promotes the bit formation widthwise. Pit width W1 for the signal (b) is larger than pit width W2 for the signal (c). Therefore, the recording using the signal (b) decreases a pit interval between adjacent tracks. During reproduction, a reproducing beam spot is easily applied to the adjacent pit to cause an increased crosstalk. By contrast, the high recording power enables excellent pit formation and decreases a jitter. The recording using the signal (c) increases a pit interval between adjacent tracks because the pit width W2 is small. During reproduction, a reproducing beam spot is hardly applied to the adjacent pit to cause a decreased crosstalk. By contrast, the low recording power results in degraded pit formation and increases a jitter.

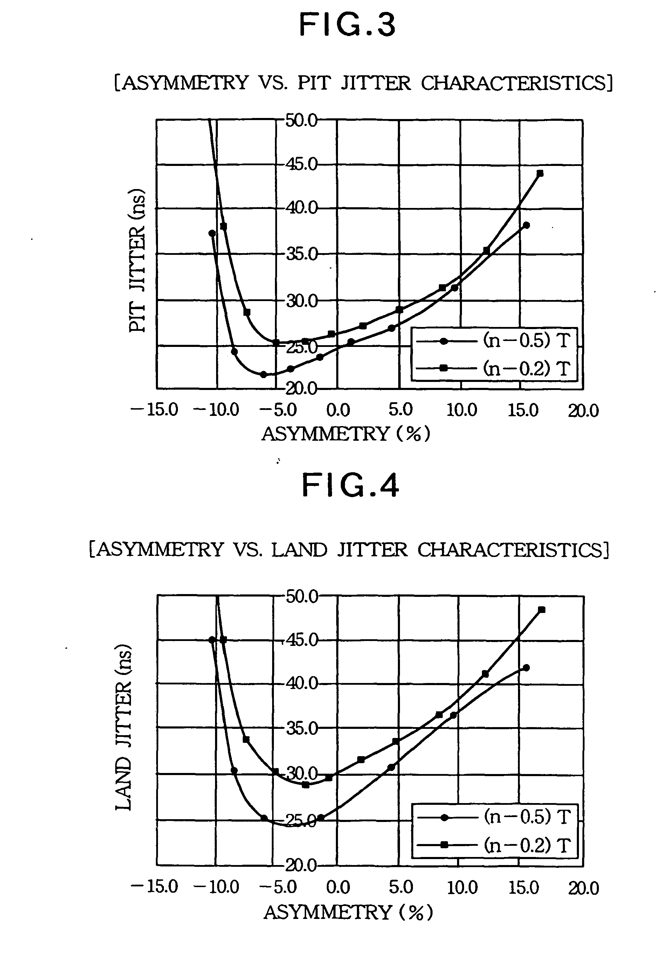

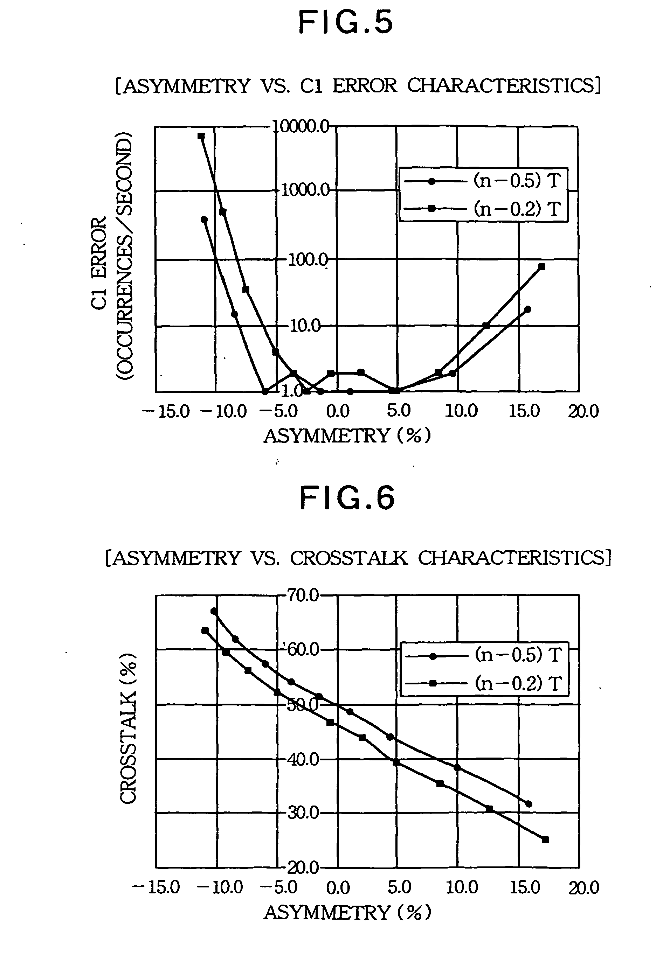

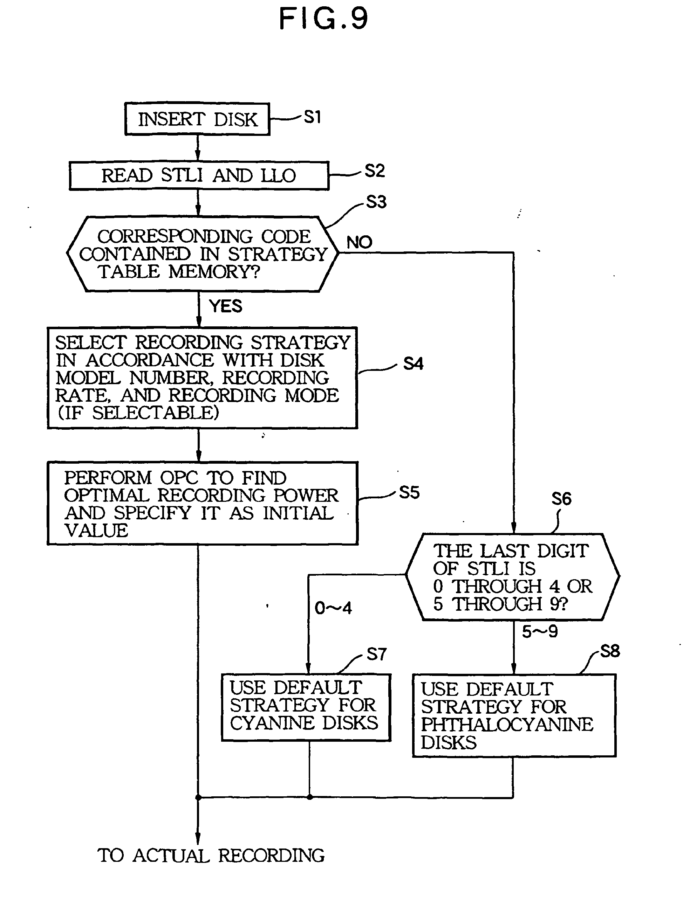

FIGS. 3 through 6 show characteristics of reproduction signals after 4x recording on a cyanine CD-R disk manufactured by a certain company by setting the correction value K1 for FIG. 2(b) to -0.5 and the correction value K2 for FIG. 2(c) to -0.2. Here, the asymmetry value varies with the recording power. FIG. 3 shows changes of pit jitters in accordance with changes of asymmetry values. FIG. 4 shows changes of land jitters in accordance with changes of asymmetry values. FIG. 5 shows changes of C1 errors in accordance with changes of asymmetry values. FIG. 6 shows changes of crosstalk values in accordance with changes of asymmetry values. According to FIGS. 3 and 4, it is understood that recording using the short pulse in FIG. 2(b) causes smaller jitters on the whole than recording using the long pulse in FIG. 9(c). According to FIG. 5, it is understood that recording using the short pulse in FIG. 2(b) causes a fewer error occurrences in a wide range of asymmetry values than recording using the long pulse in FIG. 9(c). Consequently, rather than recording using the long pulse in FIG. 2(c), recording using the short pulse in FIG. 2(b) provides a wide power margin, i.e., a laser power range that keeps jitters and C1 errors below the respective specified criteria. By contrast, as shown in FIG. 6, it is understood that recording using the long pulse in FIG. 2(c) causes lower crosstalks (improved approximately 5%) on the whole than recording using the short pulse in FIG. 2(b). According to the above-mentioned observations, decreasing a jitter (to decrease C1 errors and widen the power margin) increases a crosstalk. Decreasing a crosstalk increases a jitter (to increase C1 errors and narrow the power margin). Consequently, it is difficult to set value K so as to assign optimal values to both the jitter (C1 error and power margin) and the crosstalk.

As a solution to this problem, there is provided a plurality of recording strategies having different values K for recording on optical disks with the same model number at the same recording rate and the same linear velocity. For music recording and the like where an importance is given to crosstalk reduction, for example, the pulse width is increased and the recording power is decreased to prevent the pit width from increasing and to decrease crosstalk. Increasing the pulse width slightly increases jitters and possibilities of read error occurrences during reproduction. In the music recording, however, the occasional occurrence of random errors does not cause too large a noise. Further, since there is the correlation between preceding and succeeding data, it is easy to interpolate lost data. Rather, decreasing constantly occurring crosstalks gives precedence to the effect of improving the sound quality.

On the contrary, recording computer data uses a shorter pulse width and a higher recording power to form sharp pits. This decreases jitters during reproduction and minimizes read error occurrences. Increasing the recording power slightly increases crosstalks. However, this causes no problem because computer data is independent of the sound quality. Since just a single error may cause a fatal error, the effect of minimizing read error occurrences is significant.

Based on the above-mentioned concept, the present invention attaches importance to crosstalks for music recording and to jitters for computer data recording. To be capable of such recording, the present invention provides a plurality of types of recording strategies and allows them to be selectively used for recording on optical disk with the same model number at the same recording rate and the same linear velocity.

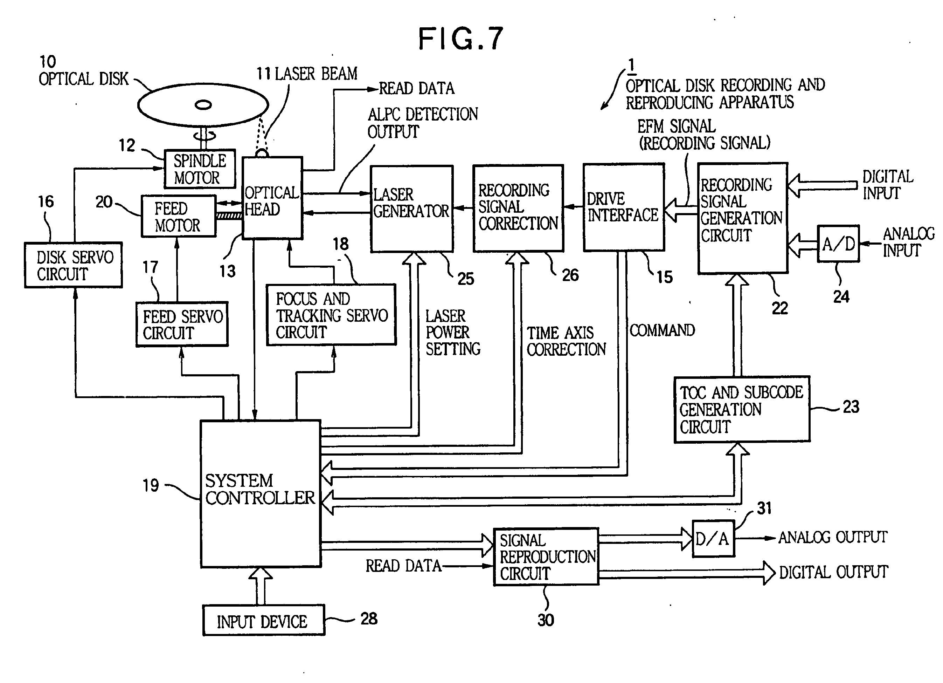

Now, embodiments of the present invention will be described in detail. FIG. 7 shows a system configuration of an optical disk recording and reproducing apparatus (CD-R disk recording and reproducing apparatus) according to the present invention. An optical disk recording apparatus 1 can be configured to be a standalone CD-R recording and reproducing apparatus, a combination of a CD-R drive and a personal computer, and the like. An input device 28 is used by a user to enter a recording rate. The input device 28 is also used by a user to change recording modes. Generally, the recording mode changeover operation signifies an instruction to change between normal recording in preference to decrease of jitters and recording in preference to decrease of crosstalks. Specifically, the recording mode changeover operation signifies an instruction to change between normal recording of computer data and recording of music data.

According to an instruction from a system controller 19, a disk servo circuit 16 controls revolutions of a spindle motor 12 at a constant linear velocity according to a specified recording rate. The linear velocity is set to a value from 1.2 through 1.4 m/s for 1x speed recording, to a value twice as large as 1x speed recording, to a value quadruple as large as 1x speed recording, and so on according to the recording rate. The CD-WO standard specifies the constant linear velocity control so that a pre-groove wobble becomes 22.05 kHz. The wobble can be detected from an output signal of an optical head 13, i.e., from the remainder of a tracking error signal. The spindle motor 12 is PLL-controlled so that the wobble can be detected at the specified frequency such as 22.05 kHz for 1x speed, 44.1 kHz for 2x speed, 88.2 kHz for 4x speed, and so on.

According to an instruction from the system controller 19, a focus and tracking servo circuit 18 controls a focus and tracking of a laser beam 11 irradiated from a semiconductor laser in the optical head 13. The tracking control is performed by detecting the pre-groove formed on an optical disk 10. According to an instruction from the system controller 19, a feed servo circuit 17 drives a feed motor 20 to move the optical head 13 along the radial direction of the optical disk 10.

Digital or analog input signals are recorded on an optical disk (CD-R disk) 10 at a speed corresponding to the recording rate. A digital signal is directly input to a recording signal generation circuit 22. An analog signal is input to the recording signal generation circuit 22 via an A/D converter 24. The recording signal generation circuit 22 interleaves input data and supplies an error check code. The recording signal generation circuit 22 also supplies TOC, TOC information generated from a subcode generation circuit 23, and subcode information. The recording signal generation circuit 22 then performs EFM modulation, generates serial data in a CD standard format at a transfer rate corresponding to the recording rate, and outputs this data as a recording signal.

This recording signal is input to a recording signal correction section (recording signal correction circuit) 26 via a drive interface 15. The recording signal correction section 26 uses the preset recording strategy concerning timing axes (pulse widths and start/stop timings) of recording signal pulses to correct the timing axis of the recording signal. The recording strategy is predefined in accordance with a combination of the model number (indicating which disk manufacturer made the CD-R disk) of the optical disk 10 to be used, the recording rate, and the recording mode. The recording signal is then input to a laser generator section (laser generation circuit) 25. The laser generator section 25 drives the semiconductor laser in the optical head 13 in accordance with the recording signal and applies the laser beam 11 to a recording surface of the optical disk 10 to form pits for recording. Concerning the laser power (recording power) during recording, the asymmetry value for optimum recording is predefined as an asymmetry target value in accordance with a combination of the model number, the recording rate, and the recording mode of the optical disk 10 to be used. The test recording prior to actual recording is performed to find the power that can achieve the asymmetry target value. This power is specified as an initial value. An ALPC (Automatic Laser Power Control) circuit provides high-precision control based on the specified power. In this manner, data is recorded on the optical disk 10 according to the CD-WO standard format, the transfer speed, and the linear velocity (1.2 to 1.4 m/s). Upon completion of recording, data is reproduced by applying a reproduction laser beam (having a power smaller than that for recording) to the optical disk 10. A signal reproduction circuit 30 demodulates read data. The read data is supplied to the D/A converter 31 and is converted into an analog signal for output, or directly outputted as a digital signal.

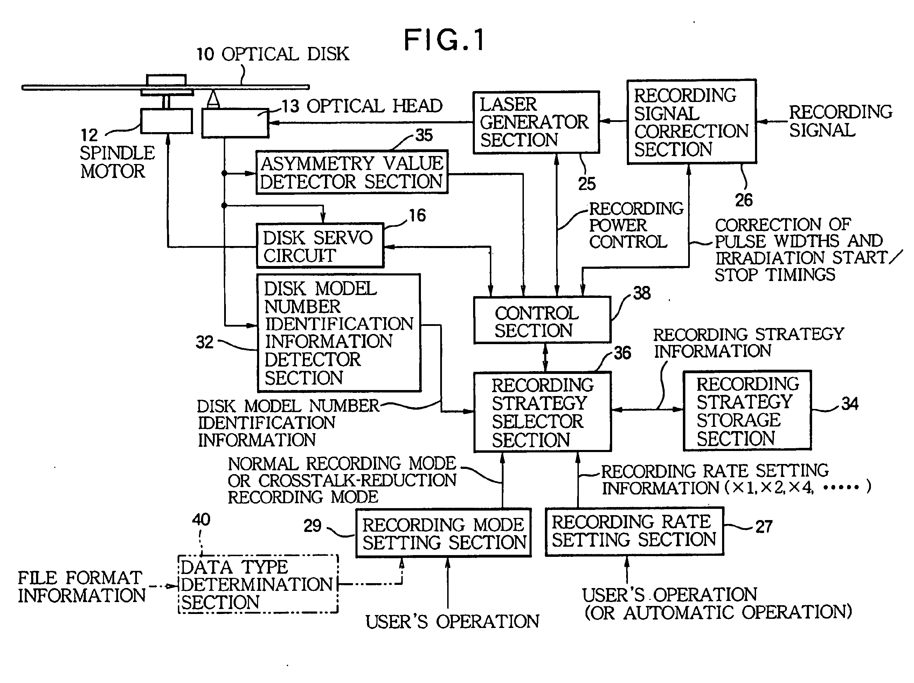

FIG. 1 shows a control block for recording control by the system controller 19 in FIG. 7. A recording rate setting section 27 corresponds to the input device 28 in FIG. 7 and specifies a recording rate (xl, x2, x4, and so on) according to user's operations. A recording mode setting section 29 corresponds to the input device 28 in FIG. 7 and performs the above-mentioned recording mode changeover operation according to user's operations. A disk model number identification information detector section 32 detects information for identifying a model number of the optical disk 10 mounted on the optical disk apparatus 1. As the disk model number identification information, it is possible to use an ATIP signal recorded on the wobble in the lead-in area of the optical disk 10.
A CD-R disk is assigned values available as the lead-in start time STLI (start time of lead-in), i.e., ten frame values for each manufacturer within a specified time. The manufacturer allocates the assigned 10-frame numeric values to disk model numbers. As the least significant digit, numeric values 0 through 4 are allocated to cyanine disks. Numeric values 5 through 9 are allocated to phthalocyanine disks. The numeric value is recorded as an ATIP signal on the lead-in area. When the optical disk 10 is loaded into the apparatus, the lead-in start time STLI is referenced as the disk model number identification information. This makes it possible to determine which disk manufacturer fabricated the disk corresponding to that model number.

A recording strategy storage section 34 stores the asymmetry target value as the recording strategy for implementing optimum recording according to a combination of the disk model number, the recording rate, and the recording mode. The asymmetry target value provides parameters for the timing axis (pulse widths, irradiation start/stop timing) of laser drive signal waveforms and parameters for the laser power. A parameter for the timing axis of laser drive signal waveforms comprises the basic strategy (n+K)T and the fine adjustment amount supplied for each combination of the pit length and the land length as needed.

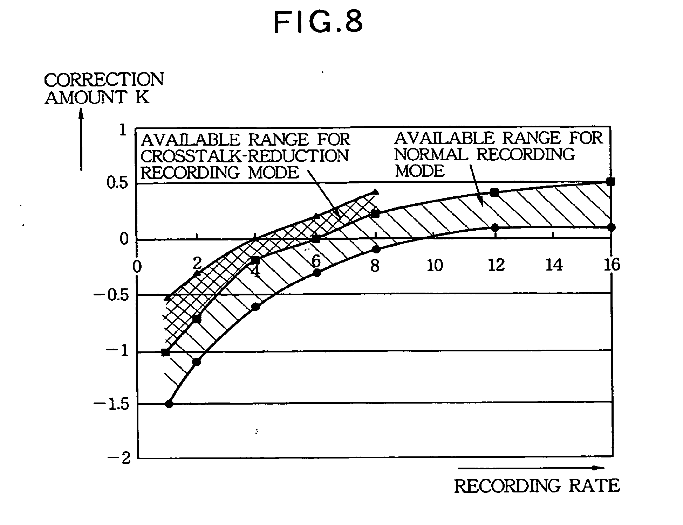

The following describes value K of the basic strategy (n+K)T stored in the recording strategy storage section 34. FIG. 8 shows the range of correction amount K to improve C1 error characteristics and jitter characteristics of reproduction signals for recording on optical disks of the same model number by changing recording rates and keeping an optimal recording power. FIG. 8 shows the range separately in normal recording (jitter-conscious recording or computer data recording) mode according to a conventional recording strategy and in crosstalk-reduction (music recording) mode specific to the present invention. As shown in FIG. 8, as the recording rate decreases the value K decreases, and as the recording rate increases the value K also increases for the following reason. Decreasing the recording rate automatically decreases the recording power. This causes less sharp pits to be formed, and increase of jitters. The value K is set to a small value (lowered to the negative direction) to shorten the pulse width. This suppresses a decrease in the recording power to prevent jitters from increasing. On the other hand, increasing the recording rate automatically increases the recording power. The crosstalk increases accordingly. The value K is set to a large value (raised to the positive direction) to lengthen the pulse width. This suppresses a increase in the recording power to prevent the crosstalk from increasing. In the normal recording mode, the value K is set lower than that in the crosstalk-reduction recording mode, i.e., a value lowered to the negative direction. As shown in FIG. 2(b), the pulse width is decreased, and the recording power is increased. In the crosstalk-reduction recording mode, however, the value K is set higher than that in the normal recording mode, i.e., a value raised to the positive direction. As shown in FIG. 2(c), the pulse width is increased, and the recording power is decreased. For example, the 4x speed recording can set value K (K1) to - 0.5 in the normal recording mode and value K (K2) to -0.2 in the crosstalk-reduction recording mode, i.e., K1 < K2.

The K value for the normal recording mode enables recording at a sufficiently high recording rate. If the K value for the crosstalk-reduction recording mode uses too high a recording rate, however, the recording quality degrades. It is desirable to specify the upper bound for recording rates selectable in the crosstalk-reduction recording mode smaller than that for recording rates selectable in the normal recording mode. For this reason, the recording strategy storage section 34 stores the recording strategy up to high recording rates (e.g., x1 to x32 speeds) for the normal recording mode. The recording strategy storage section 34 stores the recording strategy up to lower recording rates (e.g., x1 to x8 speeds) than them. When a specified recording rate (e.g., x16 speed or more) is higher than a given recording rate (e.g., x8 speed), it is possible to automatically settle the normal recording mode. The music recording is subject to crosstalk especially on large-capacity disks. Accordingly, it is possible to provide only optical disks having a given data capacity or more (e.g., 80-minute CD-R disks having the 700 MB data capacity) with two recording strategies for the normal recording mode and the crosstalk-reduction recording mode. Only the recording strategy for the normal recording mode can be provided to optical disks having data capacities less than the given value such as 74-minute CD-R disks having the 650 MB data capacity and CD-R disks having the 550 MB data capacity for 63-minute recording (hereafter referred to as 63-minute disks).

The recording strategy selector section 36 reads the corresponding recording strategy from the recording strategy storage section 34 in accordance with the disk model number identification information detected by the disk model number identification information detector section 32, the recording rate configured by the recording rate setting section 27, and the recording mode specified by the recording rate setting section 27. The asymmetry value detector section 35 detects an asymmetry value from the reproduction signal of the optical disk 10. The asymmetry value is found by (a+b)/(a-b), where a is a peak level (positive value) of the reproduction EFM signal waveform, and b is a bottom level (negative value) thereof.

Prior to actual recording, the control section 38 performs OPC (Optimum Power Control) to determine a recording power's initial value for the actual recording. The OPC is performed as follows. The read recording strategy is used to correct the timing axis of test recording pulses. At the same time, the recording power is sequentially changed to test-record information on the optical disk 10. The recorded information is reproduced to find a recording power value based on the asymmetry value detected by the asymmetry value detector section 35 so that the asymmetry target value defined by the recording strategy can be obtained. After the OPC determines the recording power's initial value, the control section 38 receives a user's instruction for actual recording and sets the recording power value to the determined initial value. The control section 38 corrects the timing axis of an input recording signal according to the previously read recording strategy to actually record information on the optical disk 10. After the recording starts, the ROPC (Running Optimum Power Control) is performed as needed to provide realtime control of the recording power. Further, the control section 38 controls the disk servo circuit 16 to control revolutions of the spindle motor 12 at a speed equivalent to the instructed recording rate.

FIG. 9 shows an example of the recording strategy setting control according to the control block configuration in FIG. 1. When the optical disk 10 is inserted (Sl), the process obtains information such as a lead-in start time STLI and a maximum available lead-out start time LLO (last possible time of lead-out) from the ATIP signal recorded on the wobble in the lead-in area (S2). The recording strategy selector section 36 uses the obtained lead-in start time STLI as identification information about disk types to determine whether or not the recording strategy storage section 34 contains a corresponding code (S3). When the corresponding code is available, the recording strategy selector section 36 reads a recording strategy from the recording strategy storage section 34 and provides the recording strategy to the control section 38 (S4). The recording strategy is defined in accordance with a disk model number, and user-specified recording rate and recording mode (for the disk model number and the recording rate capable of selecting recording modes) corresponding to that code. The selected recording strategy is used to correct the timing axis of a test recording signal. At the same time, the OPC is performed to find an optimal recording power and specify it as an initial value (S5). Actual recording starts in response to a user's operation to start the actual recording. When the recording strategy storage section 34 does not contain a corresponding code, it is determined whether the least significant digit of the obtained lead-in start time STLI corresponds to any of 0 through 4 or any of 5 through 9 (S6). When the determination result indicates any of 0 through 4, the recording strategy selector section 36 reads a default strategy for cyanine disks, i.e., a standard recording strategy for cyanine disks from the recording strategy storage section 34 and allocates the default strategy to the control section 38 (S7). When the determination result indicates any of 5 through 9, the recording strategy selector section 36 reads a default strategy for phthalocyanine disks, i.e., a standard recording strategy for phthalocyanine disks from the recording strategy storage section 34 and allocates the default strategy to the control section 38 (S8). The actual recording starts in response to a user's operation to start the actual recording.

According to the above-mentioned embodiment, a user is responsible for selecting the recording modes. In addition, it is also possible to automatically change the recording modes by determining data types. In such case, for example, a data type determination section 40 is provided as indicated by a dash-double-dot line in FIG. 1 to determine audio data or computer data according to file formats and the like of the recorded data. When audio data is determined, the recording mode setting section 29 records the data based on this determination by automatically specifying a recording strategy for the corresponding crosstalk-reduction recording mode, if any, stored in the recording strategy storage section 34; otherwise specifying a recording strategy for the normal recording mode. When a manual/automatic selection capability is needed, there is additionally provided a manual/automatic selection changeover section. In this case, when the manual selection is used, the recording mode setting section 29 selects a recording strategy corresponding to a user's instruction. When the automatic selection is used, the recording mode setting section 29 selects a recording strategy corresponding to the determination by the data type determination section 40.

According to the above-mentioned embodiment, the recording rate setting section 27 specifies recording rate based on a user's operation. Further, it is possible to automatically specify a predetermined recording rate based on disk model numbers and the like. According to the above-mentioned embodiment, the disk model number identification information detector section 32 identifies a disk model number by detecting the lead-in start time STLI recorded as an ATIP signal in the wobble of the lead-in area on the optical disk 10. However, there may be CD-R disks having the same lead-in start time STLI recorded and different data capacities. In such case, disk model numbers can be identified by additionally using a maximum available lead-out start time LLO (last possible time of lead-out) recorded as an ATIP signal in the wobble of the lead-in area. When a criteria for the maximum available lead-out start time LLO is defined to be 79 minutes, for example, it is possible to identify 80-, 74-, and 63-minute disks. The disk model numbers can be also identified by measuring a track pitch. When a criteria for the track pitch is defined to be 1.55 µm, for example, it is possible to identify 80-, 74-, and 63-minute disks. For example, a track pitch can be found from a feed amount of the optical head against disk revolutions. Alternatively, a user can judge the recording time in minutes for a disk and specify the duration. The present invention can be applied to optical disks compliant with the mark length recording other than the CD-WO standard.

## Claims

1. An optical disk recording method of recording information at a given recording rate by irradiating a laser beam (11) modulated by a drive signal onto a surface of an optical disk (10) moving at a given linear velocity relative to the laser beam (11), the information being recorded in the form of an alternate arrangement of pits and lands according to a mark length recording scheme, the method comprising the steps of:
providing a plurality of strategies which are selectable according to a model of the optical disk (10), the recording rate and the linear velocity for adjusting a pulse width of the drive signal and a power of the laser beam (11) to shape the pit;
providing a first strategy and a second strategy for the same model of the optical disk (10), the same recording rate and the same linear velocity, the first strategy being designed to shorten the pulse width of the drive signal and increase the power of the laser beam (11) as compared to the second strategy, the second strategy being designed to lengthen the pulse width of the drive signal and decrease the power of the laser beam (11) as compared to the first strategy; and
using changeably both of the first strategy and the second strategy dependently on conditions of the recording of information, for recording on the same model of the optical disk.

2. An optical disk recording method according to claim 1, wherein the first strategy is designed to shorten the pulse width of the drive signal as compared to the second strategy and to set the power of the laser beam (11) to a level capable of obtaining an optimal asymmetry value of a signal reproduced from the optical disk (10), thereby decreasing jitters of the recorded information as compared to the second strategy, the second strategy being designed to lengthen the pulse width of the drive signal as compared to the first strategy and to set the power of the laser beam (11) to a level capable of obtaining an optimal asymmetry value of the reproduced signal, thereby decreasing crosstalk of the recorded information as compared to the first strategy.

3. An optical disk recording method according to claim 1 or 2, the method further comprising the steps of:
specifying a target asymmetry value of a signal reproduced from the optical disk (10) for each strategy, wherein the first strategy is designed to shorten the pulse width of the drive signal as compared to the second strategy, the second strategy being designed to lengthen the pulse width of the drive signal as compared to the first strategy; and
using changeably both of the first strategy and the second strategy in actual recording of information;
performing test-recording of information on a part of the optical disk (10) before the actual recording while sequentially changing the power of the laser beam (11) under the strategy to be used;
reproducing a signal from the part of the optical disk (10) to find and set an initial power of the laser beam (11) capable of obtaining the target asymmetry value specified for the strategy to be used; and
performing the actual recording with the set initial power.

4. An optical disk recording method according to claim 2, wherein said optical disk (10) is of CD recordable type, ;
wherein the strategies are represented by a formula (n+K)T concerning the pulse width of the drive signal where T is a time equivalent to a unit pit length, n is a multiple of a length of the pit to be formed relative to the unit pit length, and K is a correction amount for the pulse width;
wherein the first strategy is designed to set the correction amount K of the formula (n+K)T to shorten the pulse width of the drive signal as compared to the second strategy and to set the power of the laser beam (11) to a level capable of obtaining an optimal asymmetry value of a signal reproduced from the optical disk (10), thereby decreasing jitters of the recorded information as compared to the second strategy, the second strategy being designed to set the correction amount K of the formula (n+K)T to lengthen the pulse width of the drive signal relative to the first strategy and to set the power of the laser beam (11) to a level capable of obtaining an optimal asymmetry value of the reproduced signal.

5. An optical disk recording method according to any of claims 1 to 3, wherein said optical disk is of CD recordable type,
wherein the strategies are represented by a formula (n+K)T concerning the pulse width of he drive signal where T is a time equivalent to a unit pit length, n is a multiple of a length of the pit to be formed relative to the unit pit length, and K is a correction amount for the pulse width;
wherein the first strategy is designed to set the correction amount K of the formula (n+K)T to shorten the pulse width of the drive signal and increase the power of the laser beam (11) as compared to the second strategy, the second strategy being designed to set the correction amount K of the formula (n+K)T to lengthen the pulse width of the drive signal and decrease the power of the laser beam (11) as compared to the first strategy.

6. The optical disk recording method according to any of claims 1 through 5,
wherein the step of providing provides both versions of the first strategy and the second strategy for an optical disk (10) having a recording capacity measured in terms of a total recording time which is longer than a predetermined recording time, and providing only one version of the strategy equivalent to the first strategy for another optical disk having a recording capacity measured in terms of a total recording time which is not longer than the predetermined recording time.

7. The optical disk recording method according to any of claims 1 through 6,
wherein the step of providing provides both versions of the first strategy and the second strategy for a recording rate smaller than a specified value, and providing only one version of the strategy equivalent to the first strategy for another recording rate greater than the specified value.

8. The optical disk recording method according to any of claims 1 through 7,
wherein the step of using changes the first strategy and the second strategy in accordance with a changeover operation of recording modes by a user, the recording modes representing the conditions of the recording of information.

9. The optical disk recording method according to claim 8, wherein the recording modes include a normal recording mode directing a reduction of jitters of the information recorded on the optical disk (10) and an alternative recording mode directing a reduction of crosstalk of the information recorded on the optical disk, and wherein the step of using uses the first strategy for the normal recording mode and uses the second strategy for the alternative recording mode.

10. The optical disk recording method according to claim 8, wherein the recording modes include a normal recording mode directed to recording of information representing computer data and an alternative recording mode directed to recording of information representing audio data, and wherein the step of using uses the first strategy for the normal recording mode and uses the second strategy for the alternative recording mode.

11. The optical disk recording method according to any of claims 1 through 7, further comprising the step of determining whether contents of information to be recorded are computer data or audio data, so that the step of using automatically uses the first strategy when the contents of the information is determined as the computer data, and uses the second strategy when the contents of the information is determined as the audio data.

12. An optical disk recording apparatus for recording information at a given recording rate by irradiating a laser beam (11) modulated by a drive signal onto a surface of an optical disk (10) moving at a given linear velocity relative to the laser beam (11), the information being recorded in the form of an alternate arrangement of pits and lands according to a mark length recording scheme, the apparatus comprising:
a strategy storage section (34) that stores a plurality of strategies which are selectable according to a model of the optical disk (10) and the recording rate for adjusting a pulse width of the drive signal and a power of the laser beam (11) to shape the pit, the strategies being provided in a first strategy version and a second strategy version for the same model of the optical disk (10) and the same recording rate at the same linear velocity, the first strategy version being designed to shorten the pulse width of the drive signal and to increase the power of the laser beam (11) as compared to the second strategy version, the second strategy version being designed to lengthen the pulse width of the drive signal and to decrease the power of the laser beam (11) as compared to the first strategy version;
a disk model identification information detector section (32) that detects disk model identification information for identifying the model of the optical disk (10) to be recorded with the information;
a recording rate setting section (27) that sets the recording rate;
a recording mode setting section (29) that specifies one of the first strategy version and the second strategy version to be used for recording of information on the same model of optical disk;
a strategy selector section (36) that selects a corresponding strategy from the strategy storage section (34) according to the disk model identification information detected by the disk model identification information detector section (32) and the recording rate specified by the recording rate setting section (27);
a drive signal correction section (26) that corrects the pulse width of the drive signal;
a laser generator section (25) having an optical head (13) for generating the laser beam (11) in response to the drive signal; and
a control section (38) that controls the drive signal correction section (26) in accordance with the specified one of the first or second strategy version of the corresponding strategy selected by the strategy selector section (36) to correct the pulse width of the drive signal and that controls the laser generator section (25) to set the power of the laser beam (11) in accordance with the specified one of the first or second strategy version of the corresponding strategy for recording of information on the same model of optical disk.

13. An optical disk recording apparatus according to claim 12, wherein the first strategy version is designed to shorten the pulse width of the drive signal as compared to the second strategy version and to set the power of the laser beam (11) to a level capable of obtaining an optimal asymmetry value of a signal reproduced from the optical disk (10), thereby decreasing jitters of the recorded information as compared to the second strategy version, the second strategy version being designed to lengthen the pulse width of the drive signal as compared to the first strategy version and to set the power of the laser beam (11) to a level capable of obtaining an optimal asymmetry value of the reproduced signal, thereby decreasing crosstalk of the recorded information as compared to the first strategy version;
wherein said laser generator section (25) has said optical head (13) for generating the laser beam (11) in response to the drive signal with the power capable of obtaining the optimal asymmetry value of the reproduced signal; and
wherein said control section (38) controls the drive signal correction section (26) in accordance with the specified one of the first or second strategy version of the corresponding strategy selected by the strategy selector section (36) to correct the pulse width of the drive signal and that controls the laser generator section (25) to set the power of the laser beam (11) to the level capable of obtaining the optimal asymmetry of the reproduced signal in accordance with the specified one of the first or second strategy version of the corresponding strategy.

14. An optical disk recording apparatus according to claim 12, wherein the first strategy version is designed to shorten the pulse width of the drive signal as compared to the second strategy version, the second strategy version being designed to lengthen the pulse width of the drive signal as compared to the first strategy version; said apparatus further comprising:
an asymmetry value detector section (35) that detects an asymmetry value of a signal reproduced from the optical disk (10);
wherein said control section (38) performs test-recording of information on a part of the optical disk (10) before actual recording while sequentially changing the power of the laser beam (11) under the selected strategy and determines an initial power of the laser beam (11) capable of obtaining a target asymmetry value specified for the selected strategy according to the detected asymmetry value of the signal reproduced from the part of the optical disk (10), and further the control section (38) controls the drive signal correction section (26) in accordance with the specified one of the first or second strategy version of the selected strategy to correct the pulse width of the drive signal and controls the laser generator section (25) to set the initial power of the laser beam (11) capable of obtaining the optimal asymmetry of the reproduced signal in the actual recording of the information.

15. The optical disk recording apparatus according to claim 13 or 14, wherein the recording mode setting section (29) specifies one of the first strategy version and the second strategy version in accordance with a changeover operation of recording modes by a user, the recording modes representing conditions of the recording of information.

16. The optical disk recording apparatus according to any of claims 13 through 15, further comprising a data type determination section (40) that determines whether a data type of the information to be recorded is computer data or audio data, so that the recording mode setting section (29) automatically specifies the first strategy version for the computer data and the second strategy version for the audio data based on the determined data type.

## Patentansprüche

1. Ein Aufzeichnungsverfahren für eine optische Scheibe zum Aufzeichnen von Information mit einer gegebenen Aufzeichnungsrate durch Strahlen eines Laserstrahls (11), welcher durch ein Treibersignal moduliert ist, auf eine Oberfläche einer optischen Scheibe (10), welche sich mit einer gegebenen linearen Geschwindigkeit relativ zu dem Laserstrahl (11) bewegt, wobei die Information in der Form einer alternierenden Anordnung von Pits und Lands gemäß einem Markierungslängenaufzeichnungsschema aufgezeichnet wird, wobei das Verfahren folgende Schritte aufweist:
Vorsehen einer Vielzahl von Strategien, welche gemäß einem Modell der optischen Scheibe (10) auswählbar sind, die Aufzeichnungsrate und die lineare Geschwindigkeit zum Einstellen einer Pulsbreite des Treibersignals und einer Leistung des Laserstrahls (11) zum Formen des Pits;
Vorsehen einer ersten Strategie und einer zweiten Strategie für das gleiche Model der optischen Scheibe (10), die gleiche Aufzeichnungsrate und die gleiche lineare Geschwindigkeit, wobei die erste Strategie ausgebildet ist, um die Pulsbreite des Treibersignals zu verkürzen und
die Leistung des Laserstrahls (11) zu erhöhen, verglichen mit der zweiten Strategie, wobei die zweite Strategie ausgebildet ist, um die Pulsbreite des Treibersignals zu verlängern und die Leistung des Laserstrahls (11) zu verkürzen, verglichen mit der ersten Strategie; und
austauschbares Verwenden von sowohl der ersten Strategie wie auch der zweiten Strategie, und zwar abhängig von Bedingungen der Aufzeichnung von Information zum Aufzeichnen auf dem gleichen Model der optischen Scheibe.

2. Ein Aufzeichnungsverfahren für eine optische Scheibe gemäß Anspruch 1, wobei die erste Strategie ausgebildet ist, um die Pulsbreite des Treibersignals zu verkürzen, verglichen mit der zweiten Strategie, und um die Leistung des Laserstrahls (11) auf einen Pegel einzustellen, welcher dazu in der Lage ist, einen optimalen Asymmetriewert eines Signals zu erhalten, welches von der optischen Scheibe (10) wiedergegeben wird, wodurch Jitter der aufgezeichneten Information verringert werden, verglichen mit der zweiten Strategie, wobei die zweite Strategie ausgebildet ist, um die Pulsbreite des Treibersignals zu verlängern, verglichen mit der ersten Strategie, und um die Leistung des Laserstrahls (11) auf einen Pegel einzustellen, welcher dazu in der Lage ist, einen optimalen Asymmetriewert des wiedergegebenen Signals zu erhalten, wodurch Übersprechen von aufgezeichneter Information verglichen mit der ersten Strategie verringert wird.

3. Ein Aufzeichnungsverfahren für eine optische Scheibe gemäß einem der Ansprüche 1 oder 2, wobei das Verfahren ferner folgende Schritte aufweist:
Spezifizieren eines Zielasymmetriewerts eines Signals, welches von der optischen Scheibe (10) wiedergegeben wird, für jede Strategie,
wobei die erste Strategie ausgebildet ist, um die Pulsbreite des Treibersignals zu verkürzen, verglichen mit der zweiten Strategie, wobei die zweite Strategie ausgebildet ist, um die Pulsbreite des Treiberssignals verglichen mit der ersten Strategie zu verlängern; und
austauschbares Verwenden von sowohl der ersten Strategie wie auch der zweiten Strategie in dem tatsächlichen Aufzeichnen von Information;
Durchführen von Testaufzeichnung von Information auf einem Teil der optischen Scheibe (10) vor dem tatsächlichen Aufzeichnen während sequenzieller Veränderung der Leistung des Laserstrahls (11) unter der zu verwendenden Strategie;
Wiedergeben eines Signals von dem Teil der optischen Scheibe (10) zum Finden und Einstellen einer anfänglichen Leistung des Laserstrahls (11), welcher zum Erhalten des Zielasymmetriewerts in der Lage ist, welcher für die Strategie, welche verwendet werden soll, spezifiziert ist; und
Durchführen der tatsächlichen Aufzeichnung mit der eingestellten anfänglichen Leistung.

4. Ein Aufzeichnungsverfahren für eine optische Scheibe gemäß Anspruch 2, wobei die optische Scheibe (10) vom Typ einer beschreibbaren CD ist,
wobei die Strategien durch eine Formel (n+K)T repräsentiert sind, und zwar betreffend die Pulsbreite des Treibersignals, wobei T eine Zeit äquivalent zu einer Einheitspitlänge ist, n ein Vielfaches einer Länge des Pits, welches ausgebildet werden soll, relativ zu der Einheitspitlänge ist, und K ein Korrigierbetrag für die Pulsbreite ist;
wobei die erste Strategie ausgebildet ist zum Einstellen des Korrigierbetrags K der Formel (n+K)T zum Verkürzen der Pulsbreite des Treibersignals verglichen mit der zweiten Strategie und zum Einstellen der Leistung des Laserstrahls (11) auf einen Pegel, welcher dazu in der Lage ist, einen optimalen Asymmetriewert eines Signals zu erhalten, welches von der optischen Scheibe (10) wiedergegeben wird, wodurch Jitter der aufgezeichneten Information verglichen mit der zweiten Strategie verringert wird, wobei die zweite Strategie ausgebildet ist, zum Einsstellen des Korrigierbetrags K der Formel (n+K)T zum Verlängern der Pulsbreite des Treibersignals relativ zu der ersten Strategie, und zum Einstellen der Leistung des Laserstrahls (11) auf einen Pegel, welcher dazu in der Lage ist, einen optimalen Asymmetriewert des wiedergegebenen Signals zu erhalten.

5. Ein Aufzeichnungsverfahren für eine optische Scheibe gemäß einem der Ansprüche 1 bis 3, wobei die optische Scheibe vom Typ einer beschreibbaren CD ist ist,
wobei die Strategien durch eine Formel (n+K)T betreffend der Pulsbreite des Treibersignals repräsentiert sind, wobei T eine Zeit äquivalent zu einer Einheitsbitlänge ist, n ein Vielfaches einer Länge des auszubildenden Pits relativ zu der Einheitspitlänge ist, und K ein Korrigierbetrag für die Pulsbreite ist;
wobei die erste Strategie ausgebildet ist zum Einstellen des Korrigierbetrags K der Formel (n+K)T zum Kürzen der Pulsbreite des Treibersignals und Erhöhen der Leistung des Laserstrahls (11) verglichen mit der zweiten Strategie, wobei die zweite Strategie ausgebildet ist zum Einstellen des Korrigierbetrags K der Formel (n+K)T zum Verlängern der Pulsbreite des Treibersignals und Verringern der Leistung des Laserstrahls (11) verglichen mit der ersten Strategie.

6. Das Aufzeichnungsverfahren für eine optische Scheibe gemäß einem der Ansprüche 1 bis 5, wobei der Schritt des Vorsehens beide Versionen der ersten Strategie und der zweiten Strategie für eine optische Scheibe (10) vorsieht, welche eine Aufzeichnungskapazität hat, welche in Einheiten einer gesamten Aufzeichnungszeit gemessen ist, welche länger ist als eine vorbestimmte Aufzeichnungszeit, und Vorsehen von nur einer Version der Strategie äquivalent zu der ersten Strategie für eine andere optische Scheibe, welche eine Aufzeichnungskapazität hat, welche hinsichtlich einer Gesamtaufzeichnungszeit gemessen ist, welche nicht länger ist als die vorbestimmte Aufzeichnungszeit.

7. Das Aufzeichnungsverfahren für eine optische Scheibe gemäß einem der Ansprüche 1 bis 6, wobei der Schritt des Vorsehens beide Versionen der ersten Strategie und der zweiten Strategie für eine Aufzeichnungsrate kleiner als ein spezifizierter Wert vorsieht, und nur eine Version der Strategie äquivalent zu der ersten Strategie für eine andere Aufzeichnungsrate größer als der spezifizierte Wert vorsieht.

8. Das Aufzeichnungsverfahren für eine optische Scheibe gemäß einem der Ansprüche 1 bis 7, wobei der Schritt des Verwendens die erste Strategie und der zweiten Strategie gemäß einer Wechseloperation von Aufzeichnungsmodi durch einen Benutzer verändert, wobei die Aufzeichnungsmodi die Zustände des Aufzeichnens von Information repräsentieren.

9. Das Aufzeichnungsverfahren für eine optische Scheibe gemäß Anspruch 8, wobei die Aufzeichnungsmodi einen normalen Aufzeichnungsmodi beinhalten, welche eine Verringerung von Jitter der Information, welche auf die optische Scheibe (10) aufgezeichnet wird, und einen alternativen Aufzeichnungsmodus, welcher auf eine Verringerung von Übersprechen der auf die optische Scheibe aufzuzeichnenden Information, gerichtet ist, vorsieht, und wobei der Schritt des Verwendens die erste Strategie für den normalen Aufzeichnungsmodus verwendet, und die zweite Strategie für den alternativen Aufzeichnungsmodus verwendet.

10. Das Aufzeichnungsverfahren für eine optische Scheibe gemäß Anspruch 8, wobei die Aufzeichnungsmodi einen normalen Aufzeichnungsmodus beinhalten, welcher auf das Aufzeichnen von Information gerichtet ist, welche Computerdaten repräsentiert, und einen alternativen Aufzeichnungsmodus, welcher auf das Aufzeichnen von Information, welche Audiodaten repräsentiert, gerichtet ist, und wobei der Schritt des Verwendens die erste Strategie für den normalen Aufzeichnungsmodus verwendet, und die zweite Strategie den alternativen Aufzeichnungsmodus verwendet.

11. Das Aufzeichnungsverfahren für eine optische Scheibe gemäß einem der Ansprüche 1 bis 7, welches ferner den Schritt des Bestimmens aufweist, ob Inhalte der Information, welche aufgezeichnet werden soll, Computerdaten oder Audiodaten sind, so dass der Schritt des Verwendens automatisch die erste Strategie verwendet, wenn die Inhalte der Information als die Computerdaten bestimmt werden, und die zweite Strategie verwendet, wenn die Inhalte der Information als die Audiodaten bestimmt werden.

12. Eine Aufzeichnungsvorrichtung für eine optische Scheibe zum Aufzeichnen von Information mit einer gegebenen Aufzeichnungsrate durch Strahlen eines Laserstrahls (11), welcher durch ein Treiberssignal moduliert wird, auf eine Oberfläche einer optischen Scheibe (10), welche sich mit einer gegebenen linearen Geschwindigkeit relativ zu dem Laserstrahl (11) bewegt, wobei die Information, welche aufgezeichnet werden soll, in der Form von alternierenden Anordnungen von Pits und Lands gemäß einem Markierungslängenaufzeichnungsschema aufgezeichnet wird, wobei die Vorrichtung folgendes aufweist:
einen Strategiespeicherabschnitt 34, welcher einer Vielzahl von Strategien speichert, welche gemäß einem Modell der optischen Scheibe (10) auswählbar sind, und der Aufzeichnungsrate zum Einstellen einer Pulsbreite des Treibersignals und einer Leistung des Laserstrahls (11) zum Formen des Pits, wobei die Strategien in einer ersten Strategieversion und einer zweiten Strategieversion für das gleiche Model der optischen Scheibe (10) und der gleichen Aufzeichnungsrate bei der gleichen linearen Geschwindigkeit vorgesehen sind, wobei die erste Strategieversion ausgebildet ist, um die Pulsbreite des Treibersignals zu verkürzen, und um die Leistung des Laserstrahls (11) zu erhöhen, verglichen mit der zweiten Strategieversion, wobei die zweite Strategieversion ausgebildet ist, um die Pulsbreite des Treibersignals zu verlängern und die Leistung des Laserstrahls (11) zu verringern, verglichen mit der ersten Strategieversion;
einen Scheibenmodellidentifikationsinformationdetektorabschnitt (32), welcher Scheibenmodellidentifikationsinformation zum Identifizieren des Models der optischen Scheibe (10) identifiziert, welche mit der Information aufgezeichnet wird;
einen Aufzeichnungsrateneinstellabschnitt (27), welcher die Aufzeichnungsrate einstellt;
einen Aufzeichnungsmoduseinstellabschnitt (29), welcher eine der ersten Strategieversion und der zweiten Strategieversion, welche zum Aufzeichnen von Information verwendet werden soll, auf das gleiche Modell der optischen Scheibe einstellt;
einen Strategieauswahlabschnitt (36), welcher eine korrespondierende Strategie von dem Strategiespeicherabschnitt (34) gemäß der Scheibenmodellidentifikationsinformation auswählt, welche durch den Scheibenmodellidentifikationsinformationdetektorabschnitt (32) detektiert wurde, und der Aufzeichnungsrate, welche durch den Aufzeichnungsrateneinstellabschnitt (27) spezifiziert wurde;
einen Treibersignalkorrigierabschnitt (26), welcher die Pulsbreite des Treibersignals korrigiert;
einen Lasererzeugungsabschnitt (25), welcher einen optischen Kopf (13) zum Erzeugen des Laserstrahls (11) ansprechend auf das Treibersignal hat; und
einen Steuerungsabschnitt (38), welcher den Treibersignalkorrigierabschnitt (26) gemäß der spezifizierten der ersten oder zweiten Strategieversion der korrespondierenden Strategie spezifiziert, welche durch den Strategieauswahlabschnitt (36) ausgewählt wurde, um die Pulsbreite des Treibersignals zu korrigieren, und um den Lasererzeugungsabschnitt (25) zu steuern, um die Leistung des Laserstrahls (11) gemäß der Spezifizierten der ersten oder zweiten Strategieversion der entsprechenden Strategie einzustellen, zum Aufzeichnen von Information auf dem gleichen Modell der optischen Scheibe.

13. Eine Aufzeichnungsvorrichtung für eine optische Scheibe gemäß Anspruch 12, wobei die erste Strategieversion ausgebildet ist, um die Pulsbreite des Treibersignals verglichen mit der zweiten Strategieversion zu verkürzen, und um die Leistung des Laserstrahls (11) auf einen Pegel einzustellen, welcher dazu in der Lage ist, einen optimalen Asymmetriewert eines Signals zu erhalten, welcher von der optischen Scheibe (10) wiedergegeben wird, wodurch Jitter der aufgezeichneten Information verringert wird, verglichen mit der zweiten Strategieversion, wobei die zweite Strategieversion ausgebildet ist, um die Pulsbreite des Treibersignals verglichen mit der ersten Strategieversion zu verlängern, und um die Leistung des Laserstrahls (11) auf einen Pegel einzustellen, welcher zum Erhalten eines optimalen Asymmetriewerts des wiedergegebenen Signals in der Lage ist, wodurch Übersprechen der aufgezeichneten Information verglichen mit der ersten Strategieversion verringert wird;
wobei der Lasererzeugungsabschnitt (25) den optischen Kopf (13) audweist, zum Erzeugen des Laserstrahls (11) ansprechend auf das Treibersignal mit der Leistung zum Erhalten des Optimalasymmetriewerts des wiedergegebenen Signalsatz; und
wobei der Steuerungsabschnitt (38) den Treibersignalkorrigierabschnitt (26) gemäß dem spezifizierten der ersten oder zweiten Strategieversion der korrespondierenden Strategie, welche durch den Strategieauswahlabschnitt (36) ausgewählt wurde steuert, um die Pulsbreite des Treibersignals zu korrigieren, und um den Lasererzeugungsabschnitt (25) zu steuern, um die Leistung des Laserstrahls (11) auf den Pegel einzustellen, welcher zum Erhalten der optimalen Asymmetrie des wiedergegebenen Signals gemäß der spezifizierten der ersten oder zweiten Strategieversion der korrespondierenden Strategie zu erhalten.

14. Eine Aufzeichnungsvorrichtung für eine optische Scheibe gemäß Anspruch 12, wobei die erste Strategieversion ausgebildet ist, um die Pulsbreite des Treiberssignals verglichen mit der zweiten Strategieversion zu verkürzen, wobei die zweite Strategieversion ausgebildet ist, um die Pulsbreite des Treiberssignals verglichen mit der ersten Strategieversion zu verlängern;
wobei die Vorrichtung ferner folgendes aufweist:
Einen Asymmetriewertdetektionsabschnitt (35), welcher einen Asymmetriewert eines Signals detektiert, welches von der optischen Scheibe (10) wiedergegeben wird;
wobei der Steuerungsabschnitt (38) Testaufzeichnung von Information auf einem Teil der optischen Scheibe (10) vor dem tatsächlichen Aufzeichnen durchführt, während der sequenziellen Veränderung der Leistung des Laserstrahls (11) unter der ausgewählten Strategie und Bestimmen von anfänglicher Leistung des Laserstrahls (11), welche zum Erhalten eines Zielasymmetriewerts in der Lage ist, welcher dafür die ausgewählte Strategie gemäß dem detektierten Asymmetriewert des von dem Teil der optischen Scheibe (10) wiedergegebenen Signals spezifiziert ist, und ferner steuert der Steuerungsabschnitt (38) den Treibersignalkorrigierabschnitt (26) gemäß dem spezifizierten der ersten oder zweiten Strategieversion der ausgewählten Strategie zum Korrigieren der Pulsbreite des Treibersignals und steuert den Lasererzeugungsabschnitt (25) zum Einstellen der anfänglichen Leistung des Laserstrahls (11), welcher dazu in der Lage ist, die optimale Asymmetrie des wiedergegebenen Signals in dem tatsächlichen Aufzeichnen von Information zu erhalten.

15. Die Aufzeichnungsvorrichtung für eine optische Scheibe gemäß einem der Ansprüche 13 oder 14, wobei der Aufzeichnungsmoduseinstellabschnitt (29) eine der ersten Strategieversion und der zweiten Strategieversion gemäß einer Wechseloperation vom Aufzeichnungsmodi durch einen Benutzer spezifiziert, wobei die Aufzeichnungsmodi Zustände des Aufzeichnens von Information repräsentieren.

16. Die Aufzeichnungsvorrichtung für eine optische Scheibe gemäß einem der Ansprüche 13 bis 15, welche ferner einen Datentypbestimmungsabschnitt (40) aufweist, welcher bestimmt, ob ein Datentyp der Information, welche aufgezeichnet werden soll, Computerdaten oder Audiodaten ist, so dass der Aufzeichnungsmoduseinstellabschnitt (29) automatisch die erste Strategieversion für die Computerdaten und die zweite Strategieversion für die Audiodaten basierend auf dem bestimmten Datentyp spezifiziert.

## Revendications

1. Procédé d'enregistrement de disque optique pour enregistrer des informations à un débit d'enregistrement donné en projetant un faisceau laser (11) modulé par un signal de pilotage sur une surface d'un disque optique (10) se déplaçant avec une vitesse linéaire donnée par rapport au faisceau laser (11), les informations étant enregistrées sous la forme d'un agencement alterné de creux et de plats selon un processus d'enregistrement à longueur de marquage, le procédé comprenant les étapes suivantes :
prévoir une pluralité de stratégies qui sont sélectionnables en fonction d'un modèle de disque optique (10), du débit d'enregistrement et de la vitesse linéaire pour ajuster une largeur d'impulsion du signal de pilotage et une puissance du faisceau laser (11) pour mettre en forme le creux ;
prévoir une première stratégie et une deuxième stratégie pour le même modèle de disque optique (10), le même débit d'énregistrement et la même vitesse linéaire, la première stratégie étant conçue pour raccourcir la largeur d'impulsion du signal de pilotage et augmenter la puissance du faisceau laser (11) par rapport à la deuxième stratégie, la deuxième stratégie étant conçue pour rallonger la largeur d'impulsion du signal de pilotage et diminuer la puissance du faisceau laser (11) par rapport à la première stratégie ; et
utiliser de façon changeante l'une ou l'autre de la première stratégie et de la deuxième stratégie en fonction de conditions de l'enregistrement d'informations, pour enregistrer sur le même modèle de disque optique.

2. Procédé d'enregistrement de disque optique selon la revendication 1, dans lequel la première stratégie est conçue pour raccourcir la largeur d'impulsion du signal de pilotage par rapport à la deuxième stratégie et pour régler la puissance du faisceau laser (11) à un niveau capable d'obtenir une valeur d'asymétrie optimale d'un signal reproduit à partir du disque optique (10), diminuant ainsi la gigue des informations enregistrées par rapport à la deuxième stratégie, la deuxième stratégie étant conçue pour rallonger la largeur d'impulsion du signal de pilotage par rapport à la première stratégie et pour régler la puissance du faisceau laser (11) à un niveau capable d'obtenir une valeur d'asymétrie optimale du signal reproduit, diminuant ainsi la diaphonie des informations enregistrées par rapport à la première stratégie.

3. Procédé d'enregistrement de disque optique selon la revendication 1 ou 2, le procédé comprenant en outre les étapes suivantes :
spécifier une valeur d'asymétrie cible d'un signal reproduit à partir du disque optique (10) pour chaque stratégie, la première stratégie étant conçue pour raccourcir la largeur d'impulsion du signal de pilotage par rapport à la deuxième stratégie, la deuxième stratégie étant conçue pour rallonger la largeur d'impulsion du signal de pilotage par rapport à la première stratégie ; et
utiliser de façon variable l'une ou l'autre de la première stratégie et de la deuxième stratégie dans l'enregistrement effectif d'informations ;
effectuer un enregistrement de test d'informations sur une partie du disque optique (10) avant l'enregistrement effectif tout en faisant varier de façon séquentielle la puissance du faisceau laser (11) d'après la stratégie à utiliser ;
reproduire un signal à partir de ladite partie du disque optique (10) pour trouver et régler une puissance initiale du faisceau laser (11) capable d'obtenir la valeur d'asymétrie cible spécifiée pour la stratégie à utiliser ; et
effectuer l'enregistrement effectif avec la puissance initiale réglée.

4. Procédé d'enregistrement de disque optique selon la revendication 2, dans lequel le disque optique (10) est de type CD enregistrable ;
dans lequel les stratégies sont représentées par une formule (n+K)T concernant la largeur d'impulsion du signal de pilotage, où T est l'équivalent temporel d'une longueur de creux unitaire, n est un multiple d'une longueur de creux à former par rapport à la longueur de creux unitaire, et K est une quantité de correction pour la largeur d'impulsion ;
dans lequel la première stratégie est conçue pour régler la quantité de correction K de la formule (n+K)T de façon à raccourcir la largeur d'impulsion du signal de pilotage par rapport à la deuxième stratégie, et pour régler la puissance du faisceau laser (11) à un niveau capable d'obtenir une valeur d'asymétrie optimale d'un signal reproduit à partir du disque optique (10), diminuant ainsi la gigue des informations enregistrées par rapport à la deuxième stratégie, la deuxième stratégie étant conçue pour régler la quantité de correction K de la formule (n+K)T de façon à rallonger la largeur d'impulsion du signal de pilotage par rapport à la première stratégie et à régler la puissance du faisceau laser (11) à un niveau capable d'obtenir une valeur d'asymétrie optimale du signal reproduit.

5. Procédé d'enregistrement de disque optique selon l'une quelconque des revendications 1 à 3, dans lequel le disque optique est de type CD enregistrable,
dans lequel les stratégies sont représentées par une formule (n+K)T concernant la largeur d'impulsion du signal de pilotage, où T est un équivalent temporel d'une longueur de creux unitaire, n est un multiple d'une longueur de creux à former par rapport à la longueur de creux unitaire, et K est une quantité de correction pour la largeur d'impulsion ;
dans lequel la première stratégie est conçue pour régler le facteur de correction K de la formule (n+K)T de façon à raccourcir la largeur d'impulsion du signal de pilotage et à augmenter la puissance du faisceau laser (11) par rapport à la deuxième stratégie, la deuxième stratégie étant conçue pour régler la quantité de correction K de la formule (n+K)T de façon à rallonger la largeur d'impulsion du signal de pilotage et à diminuer la puissance du faisceau laser (11) par rapport à la première stratégie.

6. Procédé d'enregistrement de disque optique selon l'une quelconque des revendications 1 à 5, dans lequel l'étape de prévision prévoit les deux versions de la première stratégie et de la deuxième stratégie pour un disque optique (10) ayant une capacité d'enregistrement mesurée en terme de durée totale d'enregistrement qui est plus longue qu'une durée d'enregistrement prédéterminée, et prévoyant seulement une version de la stratégie équivalente à la première stratégie pour un autre disque optique ayant une capacité d'enregistrement mesurée en terme de durée totale d'enregistrement qui n'est pas plus longue que la durée d'enregistrement prédéterminée.

7. Procédé d'enregistrement de disque optique selon l'une quelconque des revendications 1 à 6, dans lequel l'étape de prévision prévoit les deux versions de la première stratégie et de la deuxième stratégie pour un débit d'enregistrement inférieur à une valeur spécifiée, et prévoyant seulement une version de la stratégie équivalente à la première stratégie pour un autre débit d'enregistrement supérieur à la valeur spécifiée.

8. Procédé d'enregistrement de disque optique selon l'une quelconque des revendications 1 à 7, dans lequel l'étape d'utilisation change la première stratégie et la deuxième stratégie en fonction d'une opération de permutation de mode d'enregistrement par un utilisateur, les modes d'enregistrements représentant les conditions de l'enregistrement d'informations.

9. Procédé d'enregistrement de disque optique selon la revendication 8, dans lequel les modes d'enregistrements comprennent un mode d'enregistrement normal orienté vers une réduction de la gigue des informations enregistrées sur le disque optique (10) et un mode d'enregistrement alternatif orienté vers une réduction de la diaphonie des informations enregistrées sur le disque optique, et dans lequel l'étape d'utilisation utilise la première stratégie pour le mode d'enregistrement normal et utilise la deuxième stratégie pour le mode d'enregistrement alternatif.

10. Procédé d'enregistrement de disque optique selon la revendication 8, dans lequel les modes d'enregistrements comprennent un mode d'enregistrement normal orienté vers l'enregistrement d'informations représentant des données d'ordinateur et un mode d'enregistrement alternatif orienté vers l'enregistrement d'informations représentant des données audio, et dans lequel l'étape d'utilisation utilise la première stratégie pour le mode d'enregistrement normal et utilise la deuxième stratégie pour le mode d'enregistrement alternatif.

11. Procédé d'enregistrement de disque optique selon l'une quelconque des revendications 1 à 7, comprenant en outre une étape de détermination si le contenu des informations à enregistrer est constitué de données d'ordinateur ou de données audio, de sorte que l'étape d'utilisation utilise automatiquement la première stratégie lorsque le contenu des informations est déterminé comme étant des données d'ordinateur et utilise la deuxième stratégie lorsque le contenu des informations est déterminé comme étant des données audio.

12. Dispositif d'enregistrement de disque optique pour enregistrer des informations à un débit d'enregistrement donné en projetant un faisceau laser (11) modulé par un signal de pilotage sur une surface d'un disque optique (10) se déplaçant à une vitesse linéaire donnée par rapport au faisceau laser (11), les informations étant enregistrées sous la forme d'un agencement alterné de creux et de plats selon un processus d'enregistrement à longueur de marquage, le dispositif comprenant :
une section de mémorisation de stratégie (34) qui mémorise une pluralité de stratégies qui peuvent être sélectionnées en fonction d'un modèle de disque optique (10) et du débit d'enregistrement pour ajuster une largeur d'impulsion du signal de pilotage et une puissance du faisceau laser (11) pour mettre en forme le creux, les stratégies étant prévues dans une première version de stratégie et une deuxième version de stratégie pour le même modèle de disque optique (10) et le même débit d'enregistrement à la même vitesse linéaire, la première version de stratégie étant conçue pour raccourcir la largeur d'impulsion du signal de pilotage et pour augmenter la puissance du faisceau laser (11) par rapport à la deuxième version de stratégie, la deuxième version de stratégie étant conçue pour rallonger la largeur d'impulsion du signal de pilotage et pour diminuer la puissance du faisceau laser (11) par rapport à la première version de stratégie ;
une section de détecteur d'informations d'identification de modèle de disque (32) qui détecte des informations d'identification de modèle de disque pour identifier le modèle du disque optique (10) à enregistrer avec les informations ;
une section de réglage de débit d'enregistrement (27) qui règle le débit d'enregistrement ;
une section de réglage de mode d'enregistrement (29) qui spécifie l'une de la première version de stratégie et de la deuxième version de stratégie à utiliser pour l'enregistrement d'informations sur le même modèle de disque optique ;
une section de sélecteur de stratégie (36) qui sélectionne une stratégie correspondante dans la section de mémorisation de stratégie (34) en fonction des informations d'identification de modèle de disque détectées par la section de détecteur d'informations d'identification de modèle de disque (32) et du débit d'enregistrement spécifié par la section de réglage de débit d'enregistrement (27) ;
une section de correction de signal de pilotage (26) qui corrige la largeur d'impulsion du signal de pilotage ;
une section de générateur laser (25) comportant une tête optique (13) pour générer le faisceau laser (11) en réponse au signal de pilotage ; et
une section de commande (38) qui commande la section de correction de signal de pilotage (26) en accord avec la version de stratégie spécifiée entre la première et la deuxième version de stratégie de la stratégie correspondante sélectionnée par la section de sélecteur de stratégie (36) pour corriger la largeur d'impulsion du signal de pilotage et qui commande la section de générateur laser (25) pour régler la puissance du faisceau laser (11) en fonction de la version spécifiée entre la première et la deuxième version de stratégie de la stratégie correspondante pour enregistrer les informations sur le même modèle de disque optique.

13. Dispositif d'enregistrement de disque optique selon la revendication 12, dans lequel la première version de stratégie est conçue pour raccourcir la largeur d'impulsion du signal de pilotage par rapport à la deuxième version de stratégie et pour régler la puissance du faisceau laser (11) à un niveau permettant d'obtenir une valeur d'asymétrie optimale d'un signal reproduit à partir du disque optique (10), diminuant ainsi la gigue des informations enregistrées par rapport à la deuxième version de stratégie, la deuxième version de stratégie étant conçue pour rallonger la largeur d'impulsion du signal de pilotage par rapport à la première version de stratégie et pour régler la puissance du faisceau laser (11) à un niveau permettant d'obtenir une valeur d'asymétrie optimale du signal reproduit, diminuant ainsi la diaphonie des informations enregistrées par rapport à la première version de stratégie ;
dans lequel la section de générateur laser (25) comporte la tête optique (13) pour générer le faisceau laser (11) en réponse au signal de pilotage avec la puissance permettant d'obtenir la valeur d'asymétrie optimale du signal reproduit ; et
dans lequel la section de commande (38) commande la section de correction de signal de pilotage (26) en fonction de la version spécifiée entre la première et la deuxième version de stratégie de la stratégie correspondante sélectionnée par la section de sélecteur de stratégie (36) pour corriger la largeur d'impulsion du signal de pilotage et qui commande la section de générateur laser (25) pour régler la puissance du faisceau laser (11) au niveau permettant d'obtenir l'asymétrie optimale du signal reproduit en fonction de la version spécifiée entre la première et la deuxième version de stratégie de la stratégie correspondante.

14. Dispositif d'enregistrement de disque optique selon la revendication 12, dans lequel la première version de stratégie est conçue pour raccourcir la largeur d'impulsion du signal de pilotage par rapport à la deuxième version de stratégie, la deuxième version de stratégie étant conçue pour rallonger la largeur d'impulsion du signal de pilotage par rapport à la première version de stratégie ;
le dispositif comprenant en outre :
une section de détecteur de valeur d'asymétrie (35) qui détecte une valeur d'asymétrie d'un signal reproduit à partir du disque optique (10) ;
dans lequel la section de commande (38) effectue un enregistrement de test d'informations sur une partie du disque optique (10) avant un enregistrement effectif tout en faisant varier séquentiellement la puissance du faisceau laser (11) d'après la stratégie sélectionnée, et détermine une puissance initiale du faisceau laser (11) permettant d'obtenir une valeur d'asymétrie cible spécifiée pour la stratégie sélectionnée en fonction de la valeur d'asymétrie détectée du signal reproduit à partir de ladite partie du disque optique (10), et en outre la section de commande (38) commande la section de correction de signal de pilotage (26) en fonction de la version spécifiée entre la première et la deuxième version de stratégie de la stratégie sélectionnée pour corriger la largeur d'impulsion du signal de pilotage et commande la section de générateur laser (25) pour régler la puissance initiale du faisceau laser (11) permettant d'obtenir l'asymétrie optimale du signal reproduit dans l'enregistrement effectif des informations.

15. Dispositif d'enregistrement de disque optique selon la revendication 13 ou 14, dans lequel la section de réglage de mode d'enregistrement (29) spécifie une version entre la première version de stratégie et la deuxième version de stratégie en fonction d'une opération de permutation de mode d'enregistrement par un utilisateur, les modes d'enregistrements représentant des conditions de l'enregistrement d'informations.

16. Dispositif d'enregistrement de disque optique selon l'une quelconque des revendications 13 à 15, comprenant en outre une section de détermination de type de données (40) qui détermine si un type de données des informations à enregistrer est constitué de données d'ordinateur ou de données audio, de sorte que la section de réglage de mode d'enregistrement (29) spécifie automatiquement la première version de stratégie pour les données d'ordinateur et la deuxième version de stratégie pour les données audio sur la base du type de données déterminé.
